(19) Europäisches Patentamt

European Patent Office

Office européen des brevets

(11) **EP 2 439 385 B1**

(12) **FASCICULE DE BREVET EUROPEEN**

(45) Date de publication et mention de la délivrance du brevet:
**06.09.2017 Bulletin 2017/36**

(21) Numéro de dépôt: **11182129.4**

(22) Date de dépôt: **21.09.2011**

(51) Int Cl.:
*F01N 3/08* *(2006.01)*     *F01N 3/10* *(2006.01)*
*F01N 3/20* *(2006.01)*     *F01N 13/00* *(2010.01)*
*F02D 41/02* *(2006.01)*     *F02D 41/14* *(2006.01)*

(54) **Procédé de post-traitement de gaz d'échappement d'un moteur à combustion interne**

Verfahren zur Nachbehandlung von Abgasen eines Verbrennungsmotors

Device for post-treatment of the exhaust gases from an internal combustion engine

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2010 FR 1058164**

(43) Date de publication de la demande:
**11.04.2012 Bulletin 2012/15**

(73) Titulaire: **PSA Automobiles SA**
**78300 Poissy (FR)**

(72) Inventeurs:
• **Matthess, Nils**
**92300 LEVALLOIS-PERRET (FR)**
• **Lesueur, Jean-Nicolas**
**92250 LA GARENNE COLOMBES (FR)**
• **Bertin, Thierry**
**92250 LA GARENNE-COLOMBES (FR)**
• **Blanchard, Gilbert**
**60330 LAGNY-LE-SEC (FR)**
• **Sassi, Alain**
**78960 VOISINS LE BRETONNEUX (FR)**

(74) Mandataire: **Ménès, Catherine et al**
**PSA Automobiles SA**
**VPIB - LG081**
**18 rue des Fauvelles**
**92250 La Garenne Colombes (FR)**

(56) Documents cités:
**US-A1- 2008 006 025**     **US-A1- 2010 212 295**
**US-A1- 2010 223 908**     **US-B1- 7 063 642**

**EP 2 439 385 B1**

**Description**

L'invention concerne la dépollution des moteurs à combustion interne.

Les gaz d'échappement des moteurs à combustion interne équipant la plupart des véhicules automobiles contiennent un certain nombre de polluants dont il est souhaitable de réduire les rejets dans l'atmosphère (notamment des oxydes d'azote, du monoxyde de carbone, des hydrocarbures imbrûlés, des particules et du dioxyde de carbone). Les réglementations applicables en matière de pollution par des véhicules automobiles abaissent régulièrement les plafonds de rejets acceptables. Le plafond de rejet des oxydes d'azote a ainsi subi plusieurs baisses progressives. Par ailleurs, un certain nombre de législations ont mis en place une fiscalité tenant compte de la quantité de dioxyde de carbone émise.

Une grande partie des polluants générés par un moteur à combustion interne est due à une combustion incomplète du carburant. Une première stratégie de réduction des rejets polluants consiste à réduire la quantité des polluants pénétrant dans la ligne d'échappement. Une deuxième stratégie de réduction des rejets polluants consiste à réaliser un post-traitement des gaz traversant la ligne d'échappement.

Pour réaliser un post-traitement, la plupart des véhicules sont désormais équipés d'un convertisseur catalytique comprenant un catalyseur d'oxydation (pour oxyder le monoxyde de carbone et les hydrocarbures imbrûlés) et un catalyseur de réduction (pour réduire les oxydes d'azote).

Le catalyseur est constitué d'une enveloppe métallique (appelée « canning » en anglais) montée dans la ligne d'échappement. L'enveloppe renferme un support ou substrat revêtu d'un matériau actif. Le substrat est généralement monolithique en forme de nid d'abeille formant des canaux destinés à être traversés par les gaz d'échappement. Le matériau est souvent de la cordiérite (céramique constituée d'alumine, de silice et d'oxyde de magnésium) même si certains supports peuvent être métalliques notamment. L'enduction (appelée également « washcoat » en anglais) qui correspond à la phase active du catalyseur est composée d'un certain nombre d'éléments comme l'alumine, un mélange de terres rares, des zéolithes et surtout de métaux précieux tels que le platine, le palladium ou le rhodium.

La technique de recirculation de gaz d'échappement dite EGR permet de réduire la température moyenne dans la chambre de combustion et de diminuer la quantité d'oxyde d'azote formée.

Il est également connu d'implanter un piège à NOx sur la ligne d'échappement pour stocker provisoirement les NOx avant de procéder à leur réduction lors d'une étape de régénération. Le piège à NOx comprend du baryum capable de stocker le dioxyde d'azote une fois formé par le Pt ou le Pd à partir du monoxyde d'azote lorsque la richesse dans les gaz d'échappement est pauvre. Lors des régénérations, on augmente la richesse des gaz d'échappement, ce qui permet au rhodium du piège à NOx de réaliser la réduction des oxydes d'azote.

Il est en outre connu d'utiliser un système de réduction catalytique sélective dit SCR dans lequel un réducteur tel que de l'ammoniac ou des hydrocarbures est utilisé pour réaliser la réduction des oxydes d'azote provenant du moteur.

Du fait que les moteurs Diesel produisent une plus grande quantité de particules, les lignes d'échappement incluent le plus souvent un filtre à particules destiné à piéger des particules solides ou liquides constituées essentiellement de suies ou de gouttelettes d'huile. Pour éviter l'encrassement du filtre à particules, celui-ci doit être régénéré périodiquement par combustion des particules piégées. Cette combustion ou régénération du filtre est réalisée par augmentation de la température des gaz d'échappement au-delà de 550°C ou en créant par exemple un excès de dioxyde d'azote en amont du filtre (système dit CRT), ce dioxyde d'azote participant à l'oxydation des particules stockées.

En pratique, la réduction des oxydes d'azote dans le filtre à particules est très insuffisante pour garantir le traitement de tout le flux des oxydes d'azote. Par ailleurs, le piège à NOx et la réduction catalytique sélective s'avèrent inopérants à certaines températures de fonctionnement et notamment à froid.

En particulier, la réduction catalytique sélective nécessite d'hydrolyser de l'urée à une température supérieure à 180°C. Ainsi, tant que le système de réduction catalytique sélective est froid (par exemple au démarrage du véhicule, lorsque le moteur est au ralenti ou lorsque le moteur est à faible charge), une proportion importante des oxydes d'azote formés dans le moteur est émise à l'échappement sans avoir pu être stockée ni éliminée. De telles conditions sont rencontrées durant une partie non négligeable du cycle de fonctionnement du moteur.

De façon similaire, le piège à NOx nécessite une température minimale d'activation avant d'obtenir une réaction de réduction des oxydes d'azote stockés. L'utilisation du rhodium dans le piège à NOx rend également son coût trop important.

Ces solutions techniques ont toutes pour conséquence de réduire les émissions d'oxydes d'azote au détriment d'un accroissement des émissions de dioxyde de carbone.

Le document US2007089403 décrit un dispositif de post-traitement des gaz d'échappement permettant de réduire les émissions d'oxydes d'azote. Le dispositif de post-traitement comprend d'une part un système de réduction catalytique sélective SCR et d'autre part un système d'injection du réducteur (précurseur de l'ammoniac). Un catalyseur de stockage d'oxydes d'azote est placé en amont du système de réduction catalytique. Le catalyseur de stockage d'oxydes d'azote assure l'adsorption des oxydes d'azote des gaz d'échappement à basse température, suite à un démarrage à froid ou lors du fonctionnement du moteur au ralenti. Dans cette phase, on empêche ainsi les oxydes d'azote de traverser le système SCR encore inactif. Le catalyseur de stockage d'oxydes d'azote est conçu pour libérer les oxydes d'azote à haute température, de sorte que ceux-ci sont alors convertis en eau et en diazote dans le système SCR. De plus, le dispositif de stockage d'oxydes d'azote assure la conversion du monoxyde d'azote en dioxyde d'azote. À partir d'un moteur générant une plus grande proportion de monoxyde d'azote, on peut ainsi obtenir sensiblement une même teneur en monoxyde d'azote et en dioxyde d'azote à l'entrée du système SCR, ce qui garantit son fonctionnement optimal. Le calculateur du moteur est conçu pour faire fonctionner le moteur avec des paramètres de fonctionnement optimisant une réduction des oxydes d'azote dans les gaz d'échappement à l'entrée du dispositif de post-traitement. Le dispositif de post-traitement peut ainsi être dimensionné au plus juste pour respecter les normes d'émission en oxydes d'azote.

Le document US7063642 décrit lui aussi un dispositif de post-traitement des gaz d'échappement dans lequel c'est un piège à NOx (Lean NOx Trap - LNT) qui est placé en amont d'un sytème de réduction catalytique sélective SCR. le piège à NOx a pour but de piéger les NOx pour les réduire, et il n'est apte à désorber et réduire les NOx qu'en passant périodiquement le moteur d'un mode de combustion pauvre à un mode de combustion riche (un moteur Diesel fonctionnant en temps normal en régime pauvre). Il provoque donc une surconsommation en carburant, du fait de ces changements périodiques nécessaires de régime pauvre/riche du moteur pour le désaturer.

De tels moteurs présentent cependant des inconvénients. L'optimisation des émissions en oxydes d'azote pour respecter les limites réglementaires d'émission conduit à accroître encore les émissions de dioxyde de carbone pour un moteur donné. Ainsi, de tels moteurs ne permettent pas de réduire conjointement le dioxyde de carbone et les oxydes d'azote.

L'invention vise à résoudre un ou plusieurs de ces inconvénients. L'invention porte ainsi sur un procédé de commande d'un moteur à combustion interne, comprenant :

- un circuit d'échappement s'étendant depuis une chambre de combustion du moteur jusqu'à une canule de sortie des gaz d'échappement vers l'extérieur ;
- un dispositif de purification des gaz d'échappement disposé dans le circuit d'échappement, incluant :

    - un dispositif de stockage des oxydes d'azote apte à adsorber des oxydes d'azote lorsque la température des gaz d'échappement est inférieure à un seuil de libération et apte à libérer les oxydes d'azote adsorbés lorsque la température des gaz d'échappement est supérieure au dit seuil de libération ;
    - un dispositif de réduction catalytique sélective disposé en aval du dispositif de stockage des oxydes d'azote, avec injection d'un réducteur dans le circuit d'échappement en aval du dispositif de stockage des oxydes d'azote et en amont du dispositif de réduction catalytique sélective, lorsque la tempe dératures gaz d'échappement est supérieure à la température d'amorçage du dispositif de réduction sélective.

Le moteur comprend, en outre, un calculateur configuré pour appliquer des paramètres de fonctionnement au moteur capables d'engendrer un niveau d'émissions en oxydes d'azote supérieures à 200mg/km en sortie de chambre de combustion sur le cycle d'homologation MVEG ;

Le dispositif de stockage des oxydes d'azote présente une capacité de stockage supérieure à 1g pour une température des gaz d'échappement inférieure au seuil de libération.

Le calculateur est configuré pour appliquer des paramètres de fonctionnement au moteur de façon à limiter les émissions de dioxyde de carbone au détriment des émissions d'oxydes d'azote en sortie de chambre de combustion.

Selon encore une variante, le rapport R est inférieur à 1000, avec R=ECO$_2$/ENOX, ECO2 étant la quantité de dioxyde de carbone émise à la canule de sortie échappement selon le cycle d'homologation MVEG, ENOX étant la quantité d'oxydes d'azote générée en sortie de chambre de combustion selon le cycle d'homologation MVEG.

Selon une autre variante, le dispositif de purification des gaz d'échappement est dimensionné de sorte que les gaz d'échappement contiennent une quantité d'oxydes d'azote inférieure à 80 mg/km au niveau de la canule de sortie échappement selon le cycle d'homologation MVEG.

Selon encore une autre variante, le rapport entre ladite quantité d'oxydes d'azote générée en sortie de chambre de combustion et ladite quantité d'oxydes d'azote émise au niveau de la canule de sortie échappement est supérieur à 3.

Selon une variante, le dispositif de réduction catalytique sélective présente une température d'amorçage inférieure à la température de libération du dispositif de stockage d'oxydes d'azote.

Selon une autre variante, ce moteur est à allumage commandé et comprend un catalyseur trois-voies comprenant en sortie le dispositif de stockage des oxydes d'azote. Cette fonction de stockage des oxydes d'azote peut selon une autre variante être directement intégrée au catalyseur trois-voies au moyen d'un « zone coating » c'est-à-dire d'un catalyseur qui contiendrait différentes zones en son sein : une zone pour traiter le monoxyde de carbone, les hydrocarbures imbrûlés et les oxydes d'azote et une autre zone distincte en aval de la première qui assurerait la fonction de stockage de ces mêmes oxydes d'azote.

Selon encore une variante, ce moteur est un moteur Diesel et comprend un catalyseur d'oxydation dans lequel le dispositif de stockage d'oxydes d'azote est inclus.

Selon encore une autre variante, le réducteur injecté dans le circuit d'échappement en aval du dispositif de stockage des oxydes d'azote et en amont du dispositif de réduction catalytique sélective est de l'ammoniac ou un précurseur de l'ammoniac.

L'invention porte également sur un véhicule automobile comprenant un moteur à combustion interne tel que décrit ci-dessus.

D'autres caractéristiques et avantages de l'invention ressortiront clairement de la description qui en est faite ci-après, à titre indicatif et nullement limitatif, en référence aux dessins annexés, dans lesquels :

- la figure 1 est une représentation schématique d'un moteur à combustion interne muni d'un dispositif de post-traitement des gaz d'échappement selon un exemple de mise en oeuvre de l'invention ;

- la figure 2 est un diagramme représentant des émissions d'oxydes d'azote durant un cycle d'homologation d'un moteur selon l'invention.

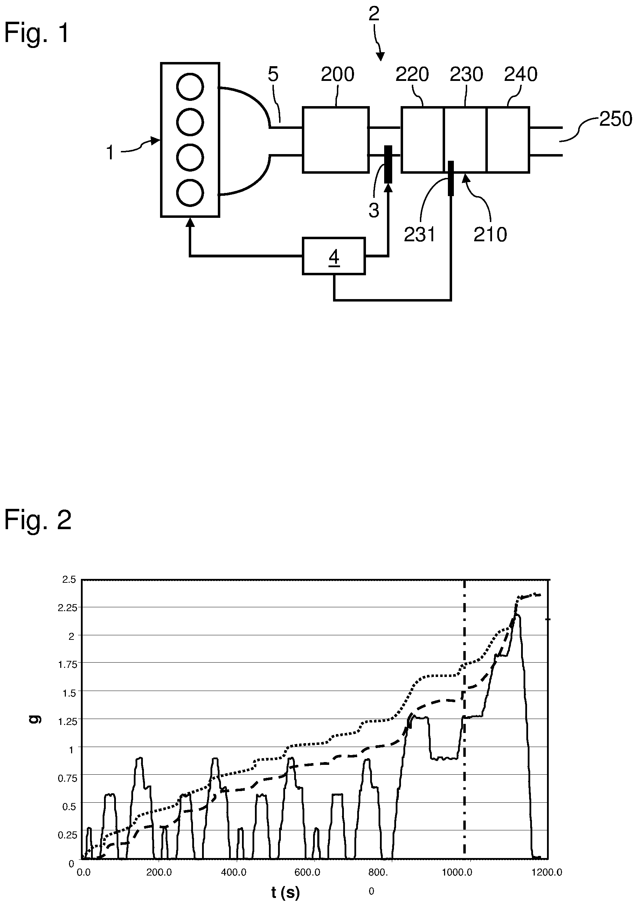

La figure 1 représente schématiquement un moteur à combustion interne 1 muni d'un système de post-traitement des gaz d'échappement (2). Le moteur 1 peut typiquement être monté dans un véhicule automobile. Le moteur 1 est muni d'un calculateur de contrôle moteur (4). De façon connue en soi, le calculateur de contrôle moteur 4 commande un certain nombre de composants du moteur (1) non représentés (par exemple des injecteurs de carburant, des bougies d'allumage, une valve d'admission d'air, une vanne de recyclage des gaz d'échappement, etc...) pour définir les paramètres de fonctionnement de ce moteur (1), en fonction de différentes valeurs mesurées et en fonction de différentes cartographies.

Les gaz d'échappement générés pas le moteur (1) s'écoulent à travers un circuit d'échappement. Le circuit d'échappement comprend une tubulure d'échappement (5) dans laquelle le système de post-traitement des gaz d'échappement (2) est monté.

Le système de post-traitement des gaz d'échappement (2) comprend un dispositif de stockage des oxydes d'azote (200) et un dispositif SCR (210) disposé en aval du dispositif de stockage (200). La tubulure d'échappement débute au niveau des chambres de combustion du moteur (1) et débouche au niveau d'une canule de sortie (250) des gaz d'échappement vers l'extérieur.

Le dispositif de stockage des oxydes d'azote (200) est logé de façon connue en soi dans une enveloppe métallique. Le dispositif de stockage des oxydes d'azote (200) comprend de préférence une enduction (ou washcoat) appliquée sur un support inerte. Le support inerte peut par exemple correspondre à une structure en nid d'abeille réalisée en céramique ou en métal, tel qu'utilisé couramment dans des catalyseurs de gaz d'échappement automobiles.

Le dispositif de stockage d'oxydes d'azote (200) est conçu pour adsorber des oxydes d'azote à basse température et libérer à haute température les oxydes d'azote adsorbés. Le dispositif de stockage d'oxydes d'azote (200) pourra par exemple être conçu pour libérer les oxydes d'azote adsorbés à une température des gaz d'échappement supérieure à 200°C, dite seuil de libération. Le dispositif de stockage d'oxydes d'azote (200) pourra également être conçu pour libérer les oxydes d'azote adsorbés à une température supérieure à 250°C, en fonction de la température d'amorçage d'un dispositif de réduction catalytique sélective (210) disposé en aval. La température d'amorçage (« ligh-off temperature » en langue anglaise) d'un polluant se définit généralement comme la température à partir de laquelle 50 % du polluant considéré sont convertis.

L'enduction du dispositif de stockage des oxydes d'azote (200) comprend de préférence au moins un composé choisi dans le groupe des métaux alcalins, des terres rares, ou des métaux alcalino-terreux qui est associé à des métaux tels que le platine, le palladium ou de le rhodium. L'enduction de stockage des oxydes d'azote comprend par exemple un matériau à base d'oxyde de cérium. La fonction oxydation, indispensable au stockage des oxydes d'azote, est assurée par du platine ou du palladium déposé sur des oxydes d'alumine. Un matériau à base d'oxyde de cérium permet d'assurer l'adsorption des oxydes d'azote à une température inférieure à 120°C et de libérer ces oxydes d'azote à des températures relativement élevées, typiquement supérieures à 200°C. L'oxyde de cérium est avantageusement utilisé en combinaison avec de l'oxyde de zirconium, de sorte que la résistance de l'enduction à haute température soit améliorée (conditions de fonctionnement pouvant apparaître à pleine charge ou lors d'une régénération d'un filtre à particules par exemple). L'adsorption des oxydes d'azote peut également être réalisée avec du baryum (baryum sous forme d'oxydes ou d'aluminates), du néodyme (Nd), du lanthane (La) ou du praséodyme (Pr). Des oxydes mixtes connus de l'homme de métier tels que des oxydes Ce-Zr-Pr, Zr-Ce-La, Zr-Pr, Al-Ba, Al-Ba-Ce ou Al-La-Ce peuvent également être utilisés. Des solutions solides Ce-Zr-La, Ce-Zr-Pr ou Ce-Zr-La-Pr peuvent également être utilisées.

Le système de post-traitement des gaz d'échappement (2) comprend d'autre part un dispositif SCR (210) disposé en aval du dispositif de stockage des oxydes d'azote (200). Le dispositif SCR (210) est logé de façon connue en soi dans une enveloppe métallique. Le dispositif SCR (210) comprend, d'amont en aval, un catalyseur d'hydrolyse (220), un catalyseur SCR (230), et un catalyseur d'élimination de l'ammoniac (240). La structure du catalyseur SCR (230) est connue en soi de l'homme du métier et permet d'assurer la réduction des oxydes d'azote des gaz d'échappement provenant de l'amont. Notons que l'ensemble (220) (230) et (240) peut être organisé de différentes manières dont les suivantes : soit une seule et même brique pour les 3, soit une brique pour chaque, soit une brique pour (220) et (230) (dans ce cas soit (220) et (230) sont rendus indépendants par la création de deux zones spécifiques en longitudinal soit rendus indépendants par la création de deux couches distinctes d'enduction) et une seconde brique en aval pour (240). Bien entendu, il est possible d'imaginer d'autres configurations sachant que l'ordre hydrolyse de l'urée (production de l'ammoniac), puis SCR et enfin conversion de l'ammoniac doit être impérativement respecté.

Un injecteur 3 permet d'injecter le précurseur de l'ammoniac (ou l'ammoniac) entre le dispositif de stockage (200) et le dispositif SCR (210). Ce précurseur injecté en amont du dispositif SCR (210) est transformé en ammoniac dans le catalyseur d'hydrolyse (220). Le précurseur est, par exemple, de l'urée prélevée dans un réservoir. Le dosage de la quantité de précurseur injectée est commandé par le calculateur (4). Le calculateur (4) est notamment configuré pour n'initier une injection que lorsque certaines conditions de fonctionnement du moteur sont atteintes. Le calculateur (4) peut par exemple conditionner l'injection par l'injecteur (3) à une température des gaz d'échappement supérieure à un seuil. Le calculateur (4) est en l'occurrence connecté à une sonde de température (231). La sonde de température (231) mesure la température des gaz d'échappement à l'entrée du catalyseur SCR (230). Cette température est comparée à un seuil d'injection du précurseur. Le seuil d'injection du précurseur est par exemple fixé au niveau de la température d'amorçage du catalyseur SCR (230), ou à un niveau légèrement inférieur pour bénéficier précocement de la réduction des oxydes d'azote.

Le dispositif SCR (210) est avantageusement muni d'un catalyseur de conversion de l'ammoniac (240) à son aval. Le catalyseur de conversion de l'ammoniac (240) évite une émission d'ammoniac à l'échappement lors d'une éventuelle injection trop importante d'ammoniac. Un tel catalyseur de conversion de l'ammoniac (240) peut être réalisé sous la forme d'un catalyseur d'oxydation usuel dont les composés actifs peuvent être du platine déposé sur un oxyde d'aluminium.

La capacité de stockage du dispositif de stockage d'oxydes d'azote (200) est supérieure à 1 gramme pour une température des gaz d'échappement inférieure au seuil de libération. Avantageusement, cette capacité de stockage sera supérieure à 1,5g, voire supérieure à 2g. En association avec cette capacité de stockage, le calculateur (4) commande le moteur en lui appliquant des paramètres de fonctionnement induisant des émissions d'oxydes d'azote élevées en sortie de chambre de combustion, en optimisant au contraire la quantité de dioxyde de carbone émise.

Une telle optimisation des émissions de dioxyde de carbone au détriment des oxydes d'azote peut être effectuée en générant des quantités d'oxydes d'azote supérieures à 200mg/km selon le cycle d'homologation MVEG, voire supérieures à 250mg/km, par des commandes appropriées du calculateur (4). Les émissions de dioxyde de carbone pourront en particulier être optimisées au détriment des émissions d'oxydes d'azote pour un fonctionnement du moteur correspondant aux cycles urbains (appelés « ECE ») du cycle d'homologation MVEG. Les quantités d'oxydes d'azote générées durant ces cycles urbains pourront être supérieures à 200mg/km durant ces cycles.

L'optimisation des émissions de dioxyde de carbone par rapport aux oxydes d'azote peut également se caractériser par la relation suivante :

$$1000 > R = ECO2/ENOX$$

Avec ECO2 la quantité de dioxyde de carbone émise à la canule de sortie échappement (250) selon le cycle d'homologation MVEG et ENOX la quantité d'oxydes d'azote générée en sortie de chambre de combustion selon le cycle d'homologation MVEG.

Le dispositif de post-traitement des gaz d'échappement (2) est avantageusement dimensionné pour que la quantité d'oxydes d'azote émise au niveau de la canule de sortie échappement (250), selon le cycle d'homologation MVEG, soit inférieure à 80mg/km malgré la quantité d'oxydes d'azote générée en sortie de chambre de combustion. Ce dimensionnement est avantageusement réalisé de sorte que le rapport entre la quantité d'oxydes d'azote générée en sortie de chambre de combustion et la quantité d'oxydes d'azote émise à la sortie de diffusion (250) soit supérieur à 3.

Pour certains moteurs (1), il peut être avantageux de disposer d'un calculateur (4) appliquant des paramètres de fonctionnement différents en fonction de la température des gaz d'échappement dans le dispositif SCR (210). Pour une température inférieure à un seuil d'adsorption optimale dans le dispositif (200) (par exemple, une température inférieure à 120°C), le moteur (1) peut être commandé de façon à limiter les émissions d'oxydes d'azote au détriment des émissions de dioxyde de carbone. Pour une température supérieure à ce seuil d'adsorption, le moteur 1 peut être commandé de façon à limiter les émissions de dioxyde de carbone au détriment des émissions d'oxydes d'azote.

Il existe un préjugé technique contre l'optimisation des émissions de dioxyde de carbone au détriment des oxydes d'azote, par crainte de ne pas respecter les seuils d'émissions réglementaires d'émission d'oxydes d'azote, par exemple tels que définis dans Euro6. Des conditions de réduction d'émissions de dioxyde de carbone conduisent généralement à des températures de gaz d'échappement plus faibles. La montée en température des gaz d'échappement est alors plus lente et la température d'amorçage du dispositif SCR est alors atteinte plus tardivement, ce qui accroît les émissions effectives d'oxydes d'azote. L'invention assurant un traitement optimisé des oxydes d'azote issu de la chambre de combustion sur une grande plage de température, elle permet à la fois de réduire les émissions de dioxyde de carbone sans accroître les émissions d'oxydes d'azote dans l'environnement.

Le niveau d'optimisation des émissions de dioxyde de carbone par rapport aux émissions d'oxydes d'azote pourra être fixé en fonction de la capacité du moteur à assurer une montée en température rapide des gaz d'échappement dans le dispositif SCR (210). Ainsi, pour un moteur où une telle montée en température est rapide, on pourra tolérer une plus grande émission d'oxydes d'azote au niveau des chambres de combustion et utiliser un dispositif de stockage (200) présentant une capacité de stockage accrue. Le compromis des paramètres de fonctionnement du moteur pourra alors être défini pour réduire très sensiblement les émissions de dioxyde de carbone.

L'invention permet de ne pas utiliser de pièges à oxydes d'azote, les oxydes d'azote libérés par le dispositif de stockage (200) étant traités par le dispositif SCR (210). Les purges d'un catalyseur d'oxydes d'azote par augmentation de la richesse sont ainsi supprimées, ce qui permet de réduire la consommation de carburant. La solution de l'invention s'avère avantageuse par rapport à un piège à oxydes d'azote puisqu'elle permet notamment de s'affranchir du coût important du rhodium nécessaire à la fabrication d'un tel dispositif. L'invention s'avère également avantageuse par rapport à un piège à oxydes d'azote puisqu'elle permet d'assurer une limitation d'émission d'oxydes d'azote sur une plus grande plage de fonctionnement de températures de gaz d'échappement.

La figure 2 illustre le fonctionnement du moteur selon l'invention durant un cycle MVEG, défini par une vitesse de véhicule en fonction du temps (courbe continue). La courbe en pointillés illustre la quantité d'oxydes d'azote cumulée en sortie de chambre de combustion. La courbe en traits discontinus illustre la quantité d'oxydes d'azote cumulée en sortie du dispositif de stockage des oxydes d'azote (200). La limite illustrée en trait mixte correspond au début de la libération des oxydes d'azote par le dispositif (200) et à l'entrée en fonction du dispositif SCR (210). Dans cet exemple, le dispositif de stockage (200) présente une quantité d'oxydes d'azote stockée de 0,2 grammes. Dans une première phase du cycle MVEG, couvrant les quatre cycles dits urbains, la température des gaz d'échappement est inférieure au seuil de libération du dispositif de stockage (200). Le dispositif de stockage (200) adsorbe alors une partie des NOx des gaz d'échappement. La quantité de NOx atteignant le dispositif SCR (210) à froid est ainsi réduite. Les émissions de NOx au niveau de la sortie (250) sont alors réduites même si le catalyseur SCR n'est pas encore à sa température d'allumage. A un moment du cycle, la température des gaz d'échappement atteint le seuil de libération du dispositif de stockage (200). Le dispositif de stockage (200) désorbe alors progressivement les oxydes d'azote. Une plus grande quantité d'oxydes d'azote traverse alors le dispositif SCR (210) alors que les gaz d'échappement ont atteint la température d'amorçage de celui-ci. Les niveaux d'émission d'oxydes d'azote au niveau de la sortie (250) sont alors très réduits, malgré les niveaux relativement élevés en sortie de chambre de combustion.

L'invention s'applique aussi bien à un moteur à allumage commandé qu'à un moteur à allumage spontané.

Le dispositif de stockage (200) peut notamment être intégré dans un catalyseur 3 voies d'un moteur à allumage commandé. Le dispositif de stockage (200) est avantageusement intégré dans un moteur à allumage commandé à charge stratifiée. Un mode de charge stratifiée peut être utilisé lorsque le moteur fonctionne à bas régime et faible charge. Grâce à l'injection directe d'essence, on réalise une injection lors de la compression, ce qui a pour effet de créer un mélange riche autour des électrodes de la bougie mais qui est isolé du reste de la paroi de la chambre de combustion par un mélange trop pauvre pour être enflammé et par des résidus de la combustion précédente. Un tel catalyseur trois voies comprend avantageusement une zone amont comportant la fonction trois voies pour l'oxydation du monoxyde de carbone, des hydrocarbures imbrûlés et la réduction des oxydes d'azote lorsque le moteur présente une richesse proche de la stoechiométrie, et une zone aval dans laquelle est intégré le dispositif de stockage d'oxydes d'azote (200). En mode charge stratifiée, les oxydes d'azote traversant la zone amont sont stockés dans la zone aval lorsque le dispositif SCR (210) n'a pas encore atteint sa température d'amorçage. La zone amont permet avantageusement d'oxyder du monoxyde d'azote en dioxyde d'azote avant que les gaz d'échappement atteignent la zone aval, ce qui augmente la quantité d'oxydes d'azote adsorbée par le dispositif de stockage (200).

La réduction des émissions de dioxyde de carbone dans un moteur à allumage commandé pourra être obtenue en augmentant le taux de compression, par exemple jusqu'à la limite du cliquetis. De façon connue en soi, les émissions de dioxyde de carbone pourront également être réduites en jouant sur la richesse du mélange introduit dans les chambres de combustion ou en jouant sur le débit de gaz provenant d'une vanne EGR.

Le dispositif de stockage d'oxydes d'azote (200) peut également être intégré dans un filtre à particules d'un moteur à allumage spontané. Le moteur 1 pourra être pourvu d'un filtre à particules en amont du dispositif SCR (210).

Le dispositif de stockage d'oxydes d'azote (200) peut également être intégré dans un catalyseur d'oxydation Diesel placé en amont du dispositif de réduction catalytique sélective d'un moteur à allumage spontané. Une première alternative pour un tel catalyseur d'oxydation est d'imprégner de manière homogène celui-ci avec un revêtement permettant à la fois l'adsorption des oxydes d'azote et l'oxydation du monoxyde de carbone et des hydrocarbures imbrûlés. Une seconde alternative est de revêtir de façon distincte plusieurs zones du catalyseur d'oxydation. Une zone amont du catalyseur d'oxydation est revêtue d'un matériau destiné à oxyder le monoxyde de carbone et les hydrocarbures imbrûlés. Une zone aval du catalyseur d'oxydation est revêtue d'un matériau destiné à adsorber les oxydes d'azote. Cette seconde alternative permet avantageusement d'oxyder du monoxyde d'azote en dioxyde d'azote avant que les gaz d'échappement atteignent la zone aval, sachant que c'est bien le dioxyde d'azote qui se stocke préférentiellement et non le monoxyde d'azote.

La réduction des émissions de dioxyde de carbone dans un moteur à allumage spontané pourra par exemple être obtenue en jouant sur l'avance à l'allumage. L'avance à l'allumage pourra par exemple être fixée à une valeur optimale de 10°vilebrequin.

**Revendications**

1. Procédé de commande d'un moteur à combustion interne (1) muni d'une ligne d'échappement s'étendant depuis une chambre de combustion du moteur jusqu'à une sortie de diffusion (250) des gaz d'échappement vers l'extérieur, un dispositif de purification des gaz d'échappement (2) étant disposé dans le circuit d'échappement, incluant :

   - un dispositif de stockage d'oxydes d'azote (200) apte à adsorber des oxydes d'azote lorsque la température des gaz d'échappement est inférieure à un seuil de libération et apte à libérer les oxydes d'azote adsorbés lorsque la température des gaz d'échappement est supérieure au dit seuil de libération ;
   - un dispositif de réduction catalytique sélective (210) disposé en aval du dispositif de stockage d'oxydes d'azote (200), avec injection d'un réducteur dans le circuit d'échappement en aval du dispositif de stockage des oxydes d'azote (200) et en amont du dispositif de réduction catalytique sélective (210), lorsque la température des gaz d'échappement est supérieure à la température d'amorçage du dispositif de réduction sélective (210) ;

   **caractérisé en ce qu'**un calculateur (4) applique au moteur des paramètres de fonctionnement selon des cartographies telles que le niveau d'émissions en oxydes d'azote est supérieur à 200mg/km en sortie de chambre de combustion selon le cycle d'homologation MVEG, plus de 1g d'oxydes d'azote pouvant être stocké dans le dispositif de stockage d'oxydes d'azote (200) pour une température des gaz d'échappement inférieure au seuil de libération, et **en ce que** le calculateur est configuré pour appliquer des paramètres de fonctionnement au moteur de façon à limiter les émissions de dioxyde de carbone au détriment des émissions d'oxydes d'azote en sortie de chambre de combustion.

2. Procédé selon la revendication 1, dans lequel le rapport R est inférieur à 1000, avec R=ECO2/ENOX, ECO2 étant la quantité de dioxyde de carbone émise à la canule de sortie échappement selon le cycle d'homologation MVEG, ENOX étant la quantité d'oxydes d'azote générée en sortie de chambre de combustion selon le cycle d'homologation MVEG.

3. Procédé selon l'une quelconque des revendications précédentes, appliqué à un moteur à combustion interne (1) muni d'une ligne d'échappement dont le dispositif de purification des gaz d'échappement est dimensionné de sorte que les gaz d'échappement contiennent une quantité d'oxydes d'azote inférieure à 80 mg/km au niveau de la canule de sortie échappement selon le cycle d'homologation MVEG.

4. Procédé selon la revendication 3, dans lequel le rapport entre ladite quantité d'oxydes d'azote générée en sortie de chambre de combustion et ladite quantité d'oxydes d'azote émise au niveau de la canule de sortie échappement est supérieur à 3.

5. Procédé selon l'une quelconque des revendications précédentes, appliqué à un moteur à combustion interne (1) muni d'une ligne d'échappement dont le dispositif de réduction catalytique sélective (210) présente une température d'amorçage inférieure à la température de libération du dispositif de stockage d'oxydes d'azote (200).

6. Procédé selon l'une quelconque des revendications précédentes, appliqué à un moteur à combustion interne (1) à allumage commandé muni d'une ligne d'échappement comportant un catalyseur trois voies en sortie duquel le dispositif de stockage des oxydes d'azote est ménagé.

7. Procédé selon l'une quelconque des revendications précédentes, appliqué à un moteur à combustion interne (1) à allumage spontané et dont la ligne d'échappement comprend un catalyseur d'oxydation dans lequel le dispositif de stockage d'oxydes d'azote est ménagé.

8. Procédé selon l'une quelconque des revendications précédentes, **caractérisé en ce que** ledit réducteur est de l'ammoniac ou un précurseur de l'ammoniac.

9. Véhicule automobile comprenant un moteur à combustion interne et une ligne d'échappement commandé selon le procédé de commande selon l'une quelconque des revendications précédentes.

**Patentansprüche**

1. Steuerverfahren eines Verbrennungsmotors (1), die mit einem Abgasstrang versehen ist, der sich von einer Brennkammer des Motors bis zu einem Diffusionsausgang (250) der Abgase nach außen erstreckt, wobei eine Abgasreinigungsvorrichtung (2) in dem Abgasstrang angeordnet ist, aufweisend:

   - eine Stickstoffoxidlagervorrichtung (200), die geeignet ist, Stickstoffoxide zu adsorbieren, wenn die Temperatur der Abgase niedriger ist als ein Freisetzungsschwellenwert, und geeignet ist, adsorbierte Stickstoffoxide freizusetzen, wenn die Temperatur der Abgase höher ist als der Freisetzungsschwellenwert;
   - eine Vorrichtung zur selektiven katalytischen Reduktion (210), die stromabwärts der Stickstoffoxidlagervorrichtung (200) angeordnet ist, mit Einspritzen eines Reduktionsmittels in den Abgaskreislauf stromabwärts der Stickstoffoxidlagervorrichtung (200) und stromaufwärts der Vorrichtung zur selektiven katalytischen Reduktion (210), wenn die Temperatur der Abgase größer ist als die Anspringtemperatur der Vorrichtung zur selektiven Reduktion (210);

   **dadurch gekennzeichnet, dass** ein Rechner (4) auf den Motor Betriebsparameter gemäß Kartographien derart anwendet, dass das Niveau an Stickstoffoxidemissionen am Ausgang der Brennkammer größer ist als 200 mg/km gemäß dem MVEG-Homologationszyklus, zusätzlich 1 g Stickstoffoxide, die in der Stickstoffoxidlagervorrichtung (200) gelagert sein können, für eine Temperatur der Abgase kleiner als der Freisetzungsschwellenwert, und dass der Rechner konfiguriert ist, um Betriebsparameter an den Motor derart anzuwenden, dass die Kohlendioxidemissionen auf Kosten der Stickstoffoxidemissionen am Ausgang der Brennkammer begrenzt werden.

2. Verfahren nach Anspruch 1, wobei das Verhältnis R kleiner ist als 1000, mit R=ECO2/ENOX, wobei ECO2 die Menge an Kohlendioxid ist, die an der Abgasausgangskanüle gemäß dem MVEG-Homologationszyklus abgegeben wird, ENOX die Menge an Stickstoffoxiden ist, die am Ausgang der Brennkammer gemäß dem MVEG-Kommunikationszyklus erzeugt wird.

3. Verfahren nach einem der vorhergehenden Ansprüche, das an einen Verbrennungsmotor (1) angewandt wird, der mit einem Abgasstrang versehen ist, dessen Abgasreinigungsvorrichtung derart bemessen ist, dass die Abgase eine Stickstoffoxidmenge kleiner als 80 mg/km im Bereich der Abgasausgangskanüle gemäß dem MVEG-Homologationszyklus enthalten.

4. Verfahren nach Anspruch 3, wobei das Verhältnis zwischen der am Brennkammerausgang erzeugten Stickstoffoxidmenge und der im Bereich der Abgasausgangskanüle abgegebenen Stickstoffoxidmenge größer ist als 3.

5. Verfahren nach einem der vorhergehenden Ansprüche, das an einen Verbrennungsmotor (1) angewandt wird, der mit einem Abgasstrang versehen ist, dessen Vorrichtung zur selektiven katalytischen Reduktion (210) eine Anspringtemperatur niedriger als die Freisetzungstemperatur der Stickstoffoxidlagervorrichtung (200) aufweist.

6. Verfahren nach einem der vorhergehenden Ansprüche, das an einen Verbrennungsmotor (1) mit gesteuerter Zündung angewandt wird, der mit einem Abgasstrang versehen ist, der einen Dreiwegekatalysator umfasst, an dessen Ausgang die Stickstoffoxidlagervorrichtung eingerichtet ist.

7. Verfahren nach einem der vorhergehenden Ansprüche, das an einen Verbrennungsmotor (1) mit Selbstzündung angewandt wird, und dessen Abgasstrang einen Oxidationskatalysator umfasst, in dem die Stickstoffoxidlagervorrichtung eingerichtet ist.

8. Verfahren nach einem der vorhergehenden Ansprüche, **dadurch gekennzeichnet, dass** das Reduktionsmittel Ammoniak oder ein Vorläufer von Ammoniak ist.

9. Kraftfahrzeug, das einen Verbrennungsmotor und einen Abgasstrang umfasst, der gemäß dem Steuerverfahren nach einem der vorhergehenden Ansprüche gesteuert wird.

**Claims**

1. A method for controlling an internal combustion engine (1) provided with an exhaust line extending from a combustion chamber of the engine up to a diffusion outlet (250) of the exhaust gases towards the exterior, a purification device (2) of the exhaust gases being disposed in the exhaust circuit, including:

   - a device (200) for storing nitrogen oxides, able to adsorb nitrogen oxides when the temperature of the exhaust gases is less than a release threshold and able to release the adsorbed nitrogen oxides when the temperature of the exhaust gases is greater than said release threshold;
   - a selective catalytic reduction device (210) disposed downstream of the device (200) for storing nitrogen oxides, with injection of a reducer in the exhaust circuit downstream of the device (200) for storing nitrogen oxides and upstream of the selective catalytic reduction device (210), when the temperature of the exhaust gases is greater than the light-off temperature of the selective reduction device (210);

**characterized in that** a computer (4) applies operating parameters to the engine according to mappings such that the level of emissions of nitrogen oxides is greater than 200 mg/km at the outlet of the combustion chamber according to the MVEG homologation cycle, more than 1 g of nitrogen oxides being able to be stored in the device (200) for storing nitrogen oxides for a temperature of the exhaust gases less than the release threshold, and **in that** the computer is configured to apply operating parameters to the engine so as to limit the emissions of carbon dioxide to the detriment of the emissions of nitrogen oxides on exit from the combustion chamber.

2. The method according to Claim 1, in which the ratio R is less than 1000, with R=ECO2/ENOX, ECO2 being the quantity of carbon dioxide emitted to the exhaust outlet pipe according to the MVEG homologation cycle, ENOX being the quantity of nitrogen oxides generated on exit from the combustion chamber according to the MVEG homologation cycle.

3. The method according to any one of the preceding claims, applied to an internal combustion engine (1) provided with an exhaust line, of which the device for purifying the exhaust gases is dimensioned such that the exhaust gases contain a quantity of nitrogen oxides less than 80 mg/km at the level of the exhaust outlet pipe according to the MVEG homologation cycle.

4. The method according to Claim 3, in which the ratio between said quantity of nitrogen oxides generated on exit from the combustion chamber and said quantity of nitrogen oxides emitted at the level of the exhaust outlet pipe is greater than 3.

5. The method according to any one of the preceding claims, applied to an internal combustion engine (1) provided with an exhaust line, of which the selective catalytic reduction device (210) presents a light-off temperature less than the release temperature of the device (200) for storing nitrogen oxides.

6. The method according to any one of the preceding claims, applied to a positive-ignition internal combustion engine (1) provided with an exhaust line comprising a three-way catalytic converter, at the outlet of which the device for storing nitrogen oxides is arranged.

7. The method according to any one of the preceding claims, applied to a self-igniting internal combustion engine (1) and the exhaust line of which includes an oxidation catalyst in which the device for storing nitrogen oxides is arranged.

8. The method according to any one of the preceding claims, **characterized in that** said reducer is ammonia or an ammonia precursor.

9. A motor vehicle including an internal combustion engine and an exhaust line controlled according to the control method according to any one of the preceding claims.

Fig. 1

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007089403 A
- US 7063642 B